# EUROPEAN PATENT APPLICATION

(11) **EP 4 421 657 A1**
(43) Date of publication of application: **28.08.2024**
(21) Application number: 24159313.6
(22) Date of filing: 23.02.2024
(51) Int. Cl.: G06F 16/535, G06F 16/583

(54) **CONTEXTUAL ASSET RECOMMENDATION**

(30) Priority: 23.02.2023 US 202363486650 P; 03.11.2023 US 202318501294
(71) Applicant: Meta Platforms Technologies, LLC, Menlo Park, CA 94025 (US)
(72) Inventor: Short, Ryan, Menlo Park (US); Guerrero, Jesse, Menlo Park (US); Gupta, Anchit, Menlo Park (US); Jones, Ian Alan, Menlo Park (US); Kerr, Logan, Menlo Park (US); Liu, Jingyu, Menlo Park (US); Mehdad, Yashar, Menlo Park (US); Nie, Yixin, Menlo Park (US); Oguz, Barlas, Menlo Park (US); Shubham, FNU Kumar, Menlo Park (US); Xu, Shuchang, Menlo Park (US); Xiong, Wenhan, Menlo Park (US)
(74) Representative: Murgitroyd & Company

(57) **Abstract**

A method and system for artificial intelligence (Al) powered contextual recommendations of digital content. The method includes receiving an input, associated with a virtual environment, at a client device. The method also includes generating image embeddings based on an image representation of the virtual environment. The method also includes analyzing the virtual environment to identify one or more digital content included in the virtual environment based on the image embeddings. The method also includes determining a context of the virtual environment based on the one or more digital content. The method also includes determining a context of the virtual environment based on the one or more digital content and generating a recommendation based on the context.

## Description

### Technical Field

The present disclosure is generally related to improving digital content recommendation in a virtual environment. More specifically, the present disclosure includes providing more accurate and/or contextually relevant digital content recommendations powered by artificial intelligence.

### Background

As social media and the social universe has expanded in virtual environments, the development of individualized virtual worlds has grown as well. In addition to existing virtual worlds, users can create their own worlds. Many asset libraries are available to aid users in creating their own worlds. As the volume of assets in the asset library continues to grow, creators will have a harder time finding the most relevant assets to their current project. Assets may be recommended to the user to reduce the burden of manually searching through every asset library. Some asset recommendations in virtual worlds are based on text inputs or text searches made by the user. As such, there is a need to provide users with more efficient and contextually accurate asset recommendations.

### Summary

The subject disclosure provides for systems and methods for contextual digital content recommendation.

According to a first aspect, there is provided a computer-implemented method, performed by at least one processor, the method comprising: receiving an input, associated with a virtual environment, at a client device; generating image embeddings based on an image representation of the virtual environment; analyzing the virtual environment to identify one or more digital content included in the virtual environment based on the image embeddings; determining a context of the virtual environment based on the one or more digital content; generating a recommendation for one or more digital content items aligned with the input based on the context of the virtual environment; and displaying, at the client device, the recommendation of the one or more digital content items.

The input may be a text query describing a desired digital content item to be added to the virtual environment.

The computer-implemented method may further comprise: captioning each of the one or more digital content based on the analyzing; and determining a context of the virtual environment based on the one or more digital content.

The computer-implemented method may further comprise identifying contextual information of the one or more digital content included in the virtual environment. The context of the virtual environment may be determined based on the contextual information.

Determining a context of the virtual environment may include: individually evaluating each of the one or more digital content in the virtual environment for context; and collectively evaluating contextual information of the virtual environment based on individual evaluations of the one or more digital content to infer the context of the virtual environment.

The computer-implemented method may further comprise categorizing each of the one or more digital content based on predefined image classes, descriptions, and text-image pairings.

The recommendation may include a content library recommendation.

The computer-implemented method may further comprise: retrieving thumbnails corresponding to the one or more digital content items; and displaying, in a selectable format, the thumbnails as the recommendation.

The computer-implemented method may further comprise: ranking the one or more digital content items based on a relevance score associated with the context of the virtual environment; and displaying, in a selectable format, the recommendation of the one or more digital content items in an order based on the ranking.

The computer-implemented method may further comprise generating captions associated with the one or more digital content included in the virtual environment. Determining a context of the virtual environment may be based on the one or more digital content and the captions.

According to a second aspect, there is provided a system comprising: one or more processors; and a memory storing instructions which, when executed by the one or more processors, cause the system to carry out the method of the first aspect.

According to a third aspect, there is provided a computer-readable storage medium having instructions embodied thereon, the instructions being executable by one or more processors to cause the one or more processors to carry out the method of the first aspect. The medium may be non-transient.

According to a fourth aspect, there is provided a computer program product comprising instructions which, when the computer program is executed by a computer, cause the computer to carry out the method of the first aspect.

These and other embodiments will be evident from the present disclosure.

### Brief Description of the Drawings

FIG. 1 illustrates a network architecture used to implement digital content recommendation.
FIG. 2 is a block diagram illustrating details of devices used in the architecture of FIG. 1.
FIG. 3 illustrates an example block diagram of a system for Al powered contextual recommendation of digital content.
FIG. 4 illustrates a flowchart of a method for providing contextually relevant recommendations.
FIG. 5 is a block diagram of an image classification neural network model framework fine-tuned.
FIGS. 6A-6B are block diagrams of a pretrained image captioning model framework fine-tuned.
FIG. 7 illustrates a block diagram of a ranking (or reranking) workflow at inference.
FIG. 8 illustrates a workflow of a process for training a transformer for candidate reranking.
FIG. 9 illustrates a block diagram of a process applied to the recommendation ML model to fine-tune the ML model.
FIG. 10 is a block diagram illustrating a computer system used to at least partially carry out one or more of operations in methods disclosed herein.

In the figures, elements having the same or similar reference numerals are associated with the same or similar attributes, unless explicitly stated otherwise.

### Detailed Description

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

As social media and the social universe has expanded in virtual environments, the development of individualized virtual worlds has grown as well. In addition to existing virtual worlds, users can create their own worlds. Many content libraries are available to aid users in creating their own worlds. As the volume of digital content (e.g., assets in asset libraries) continues to grow, creators will have a harder time finding the most relevant digital content to their current project. Digital content may be recommended to the user to reduce the burden of manually searching through every content library. Some recommendations models may be based on text inputs or text searches made by the user. However, results of said models are not contextually attuned. Further, with recommendation tools based on previous work, explicit input, related content, or peer-based models, the recommended result can often miss the mark on having immediate relevance to what a creator is trying to create at the moment. Similarly, a text search may fail to capture any contextual information from the world being built. Therefore, the recommended content may be far off base from the current world the creator desires to build. The ability to recognize objects is a fundamental problem for visual and contextual understanding. Virtual content may look different from their corresponding real-world presentation. Although this difference is easier to understand for the human eye, it is more of a challenge for machine learning (ML) and artificial intelligence (Al) models. Image understanding models suffer from domain gap issues and are not able to detect assets well in virtual environments. That is, there is a domain difference between object appearance in the real world and the virtual environment settings.

Embodiments provide a solution to the above identified problems by utilizing artificial intelligence (Al) to provide users with more efficient and contextually accurate digital content recommendations. By implementing a contextually guided AI recommendation ML model, users (e.g., creators building VR worlds) can easily discover and use the most useful digital content for content creation. Embodiments also address the domain gap between real world and virtual environment representations, in order to better understand contents inside a virtual environment and, with an improved understanding of content, to provide contextual digital content recommendations.

To provide improved contextual recommendation, embodiments leverage a text-to-model Al technology to evaluate the digital content in a virtual environment (or scene) individually and collectively to infer what is being built. AI is used to understand the context of what a creator is building based on, for example, placement of objects/assets in a scene, connections between objects/assets, relationships between other models utilizing those or similar assets, text, images, or videos identified in the application, textures, colors, or geometries/shapes.

Embodiments are not limited to contextual asset recommendation in virtual environments and may also be implemented in other instances, such as in videos, reels, or other creator applications to provide a contextual analysis to be utilized by a recommendation system or the like.

According to some embodiments, the recommendation ML model integrates digital content ranking to provide contextual recommendations to creators based on the content of the world they are building as they are building it, thus helping creators find and discover the most useful digital content. By recommending the most immediately relevant content to a current building context, the world creation time will significantly speed up, improve asset/asset library utilization, and improve overall recommendations as digital content is chosen based on previous recommendations and the world continues to be built.

Embodiments, as disclosed herein, provide a solution to the above-mentioned problems rooted in computer technology, namely, artificial intelligence (Al) powered contextual recommendations for digital content.

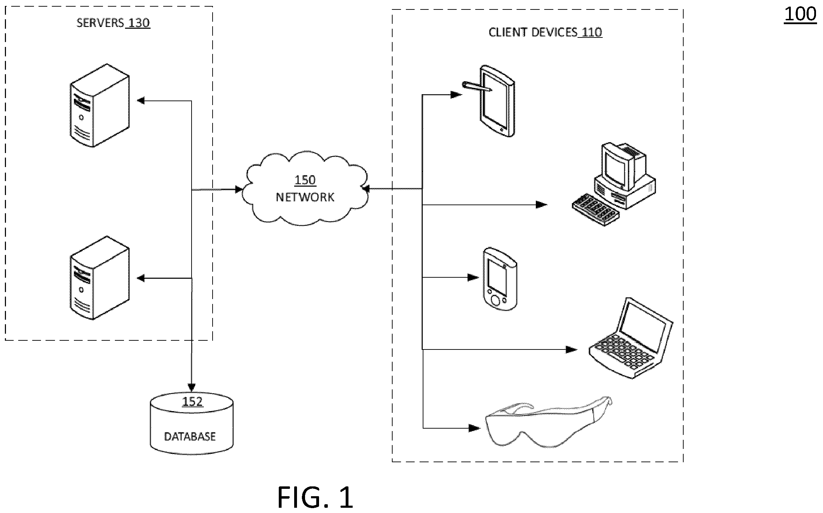

FIG. 1 illustrates a network architecture 100 in which methods, apparatuses, and systems described herein may be implemented. Architecture 100 may include servers 130 and a database 152, communicatively coupled with multiple client devices 110 via a network 150. Any one of servers 130 may host a virtual application running on client devices 110, used by one or more of the participants in the network. The servers 130 may include a cloud server or a group of cloud servers. In some implementations, the servers 130 may not be cloud-based (i.e., may be implemented outside of a cloud computing environment) or may be partially cloud-based. Client devices 110 may include any one of a laptop computer, a desktop computer, or a mobile device such as a smart phone, a palm device, or a tablet device. In some examples, client devices 110 may include a headset or other wearable device (e.g., a virtual reality or augmented reality headset or smart glass), such that at least one participant may be running an immersive reality social media application, virtual reality application, or the like installed therein.

Network 150 can include, for example, any one or more of a local area network (LAN), a wide area network (WAN), the Internet, and the like. Further, network 150 can include, but is not limited to, any one or more of the following network topologies, including a bus network, a star network, a ring network, a mesh network, a star-bus network, tree or hierarchical network, and the like, and/or a combination of these or other types of networks.

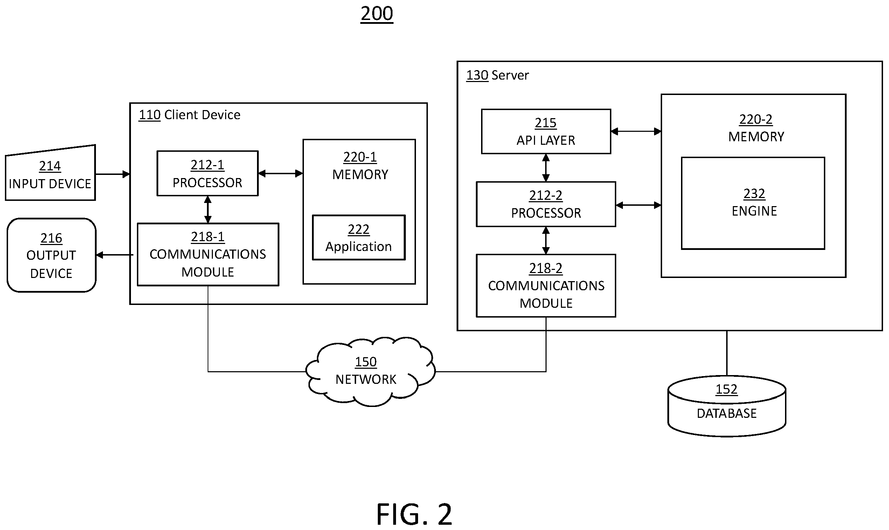

FIG. 2 is a block diagram 200 illustrating details of a client device 110 and a server 130 used in a network architecture as disclosed herein (e.g., architecture 100). Client device 110 and server 130 are communicatively coupled over network 150 via respective communications modules 218-1 and 218-2 (hereinafter, collectively referred to as "communications modules 218"). Communications modules 218 are configured to interface with network 150 to send and receive information, such as requests, responses, messages, and commands to other devices on the network 150. Communications modules 218 can be, for example, modems or Ethernet cards. Client device 110 may be coupled with an input device 214 and with an output device 216. Input device 214 may include a keyboard, a mouse, a pointer, or even a touch-screen display that a consumer may use to interact with client device 110. Likewise, output device 216 may include a display and a speaker with which the consumer may retrieve results from client device 110.

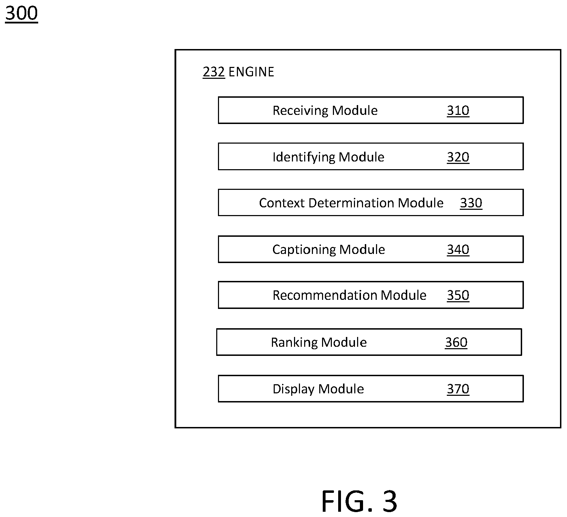

Client device 110 may also include a processor 212-1, configured to execute instructions stored in a memory 220-1, and to cause client device 110 to perform at least some of the steps in methods consistent with the present disclosure. Memory 220-1 may further include an application 222 (e.g., VR application). The application 222 may include specific instructions which, when executed by processor 212-1, cause a dataset from server 130 to be displayed for the consumer. In some examples, the application 222 runs on any operating system (OS) installed in client device 110. In some examples, the application 222 may be downloaded by the user from the server 130 and may be hosted by the server 130. The application 222 may include one or more modules or computing platform(s) configured for performing operations. Such modules are later described in detail with reference to at least FIG. 3.

The database 152 may store backup files, reports, data associated with applications, metadata, policies, and security constraints of the applications, etc., provided by one or more users of the client device 110 or generated at the server 130. A participant using client device 110 may store at least some data content in memory 220-1. In some examples, a participant may upload, with client device 110, a dataset onto server 130.

Server 130 includes an application programming interface (API) layer 215, which controls the application 222 in each of client devices 110. All functions of the application 222 are accessible through the API layer 215. Server 130 also includes a memory 220-2 storing instructions which, when executed by a processor 212-2, causes server 130 to perform at least partially one or more operations in methods consistent with the present disclosure. Memory 220-2 includes an engine 232. The engine 232 may include computing platform(s) configured for performing and operating an Al based contextual recommendation model. Processors 212-1 and 212-2, and memories 220-1 and 220-2, will be collectively referred to, hereinafter, as "processors 212" and "memories 220," respectively.

FIG. 3 illustrates an example block diagram of a system 300 for Al powered contextual recommendation of digital content. The system 300 may include computing platform(s) that may be configured by machine-readable instructions. Machine-readable instructions may include one or more instruction modules. The instruction modules may include computer program modules. The instruction modules may include one or more of a receiving module 310, identifying module 320, captioning module 330, context determination module 340, recommendation module 350, ranking module 360, display module 370, and/or other instruction modules.

In some implementations, one or more of the modules 310, 320, 330, 340, 350, 360, and 370 may be included in the client device 110 (e.g., in the application 222) and performed by one or more processors (e.g., processor 212-1). In some implementations, one or more of the modules 310, 320, 330, 340, 350, 360, and 370 may be included in the server 130 (e.g., in engine 232) and performed by one or more processors (e.g., processor 212-2). In some implementations, one or more of the modules 310, 320, 330, 340, 350, 360, and 370 are included in and performed by a combination of the client device and the server.

The receiving module 310 is configured to receive an input, associated with a scene or an environment, from a user. The input may be a text, search, video, pointer input, or user query describing a desired object/asset or digital content. The user may correspond to, for example, a creator or the like at the client device (e.g., client device 110). In some implementations, the input is associated with, but not limited to, a world, virtual world, room, etc., being built by the user.

The identifying module 320 is configured to identify digital content, such as assets, objects, characters (users or non-player characters (NPCs)), images, video, colors, texture, material, etc., in the environment. The digital content may be static (e.g., furniture) or dynamic objects users can interact with. The digital content may be uploaded, downloaded, or created by the user.

The environment may be interpreted as an image. The identifying module 320 may be further configured to generate image embeddings of the digital content based on the image using a fine-tuned image classification convolutional neural network (CNN)-based model (e.g., a contrastive language-image pretraining (CLIP) model which learns visual concepts from natural language supervision). The image embeddings from the environment are compared with asset embeddings of digital content of the system (e.g., stored in catalogs, libraries, or the like) to identify digital content in the environment. In some examples, the image of the environment may be segmented by regions of the image. The regions are then cropped. The embeddings of the cropped regions are compared with the asset embeddings. Patches may be generated using, for example, a sliding window approach and compared with existing assets in the environment. In some implementations, an out-of-domain dataset may be used along with in-domain synthetic datasets to extend to categories (or assets) not present in existing catalogs (or asset libraries).

The system 300 may further include categorizing the identified digital content using fine-tuned image classification CNN-based models such as, but not limited to, shifted window transformer and efficientNet. The image categorization may be based on predefined image classes, descriptions, and/or a text-image match.

In some implementations, the CLIP model is fine-tuned with world description and asset-title signals to improve accuracy of digital content recognition. In some implementations, the CLIP model is fine-tuned based on asset thumbnails, relevant images filtered from open-source dataset, and scenic images generated with stable diffusion.

Embodiments are not limited to the fine-tunned CLIP model for digital content identification. In some implementations, other image classification CNN-based models (such as, shifted window transformer and efficientNet) may be fine-tuned and implemented at the identifying module 320.

The captioning module 330 is configured to analyze the identified digital content and caption the digital content. For example, the captioning module 330 may generate captions and label assets with different captions, descriptions, and tags. The captions may be used to identify similar content items and establish connections between content items.

The captioning module 330 may be configured to generate captions for each digital content item identified in the environment. The captioning module 330 may use a fine-tuned pretrained image captioning or image vision model (e.g., OFA which is a unified sequence-to-sequence pretrained model) to generate the captions.

In some implementations, the captioning module 330 is configured to generate a caption for the image of the environment. In some implementations, the captioning module 330 is configured to generate a caption for each of the regions segmented from the image.

The context determination module 340 is configured to determine contextual information from the identified digital content. The context determination module 340 may determine a context of the environment (e.g., what a user is building/creating) based on the contextual information and the generated captions, as such, evaluating digital content individually and collectively to infer what is being built. Contextual information may be based, but not limited by, how digital content items interact with each other in the environment, connections between digital content items, relationships between one or more other environments including the same or similar digital content items identified in the environment, textures, colors, geometries/shapes, etc. The context determination module 340 utilizes a machine learning (ML) model trained to learn and infer context, themes, and/or style based on the environment and digital content items included therein to form an understanding of user's intent. In some examples, the context determination module 340 identifies contextual information based on asset retrieval from other scenes similar to the environment, increasing a catalog of asset data for asset discovery and environment understanding and providing the foundation for improvements to image capturing algorithms used by the identifying module 320 to identity digital content.

In some implementations, a global caption is generated for an environment. The global caption may represent a context or theme, determined by the context determination module 340, of the environment.

The recommendation module 350 is configured to generate a recommendation aligned with the input from the user based on the contextual information and captions from the environment using a recommendation ML model. The recommendation may include one or more digital content items. In some implementations, the recommendation is not limited to digital content and may include tag classifications, types of world recommendations, engagement level predictions, other world recommendations, and similarity assessments (for similarity learning problems).

In some examples, the recommendation module 350 utilizes a recommendation ML model to generate asset/object recommendations from existing catalogs. In some implementations, given the identified context (from the context determination module 340), the global caption (from the captioning module 330), the identified assets (from the identifying module 320), the recommendation module generates recommendations for contextually relevant digital content that will be most useful for users based on their specific use case, as such, offering relevant recommendations promptly to streamline a creator's workflow and reduce the need for targeted searches.

Contextual information may update at every time step given the contextual information already in a scene. As such, recommendations are updated and/or made based on the context determination module and may align with the intended purpose, style, and aesthetics of a desired environment being created. In some implementations, the contextual information is updated based on a change being identified in the environment. In some implementations, the recommendations generated by the recommendation module 350 are updated in real-time based on real-time updates to content of the environment, for example, a modification to the environment including, but not limited to, a content item being added, removed, or modified in the environment. In some implementations, the contextual information is updated based on the system receiving a new input from the user.

The recommendation module 350 may be further configured to generate recommendations for other digital content which are similar to the digital content items of the recommendation aligned with the input from the user. The other digital content may be assets available in a catalog/asset library.

In some implementations, the recommendation module 350 is further configured to recommend asset libraries based on the context information. As such, creators can easily find relevant libraries with existing groups of assets/digital content that are more relevant to their immediate use case. The contextually relevant asset libraries will also be seen as a more useful tool and likely be utilized as part of the creators regular building process, and thus prompting more library engagement.

The system 300 may be further configured to determine an impact of a particular asset to user retention for similar themed content (based on the contextual information). For example, the recommendation may include a set of three recommended digital content items and each of the digital content items in the set may be assigned an impact score. The impact score may be displayed with the set of three recommended digital content items. The impact score may help users make more informed decisions or asset selections.

The recommendation may include thumbnails. The system may be further configured to retrieve the thumbnails corresponding to the recommended digital content. The thumbnails and other metadata (e.g., descriptions of relevant assets) may be retrieved from an asset space. The asset space may include labeled asset data and assets existing in the platform/application (e.g., in existing libraries/catalogs or previously created assets by the user).

The ranking module 360 is configured to rank the digital content items of the recommendation. The ranking may be based on factors such as, but not limited to, popularity, user information, user history (e.g., previous selections made by the user with similar content items), or relevance to one or more of the identified digital contents in the environment. In some implementations, the digital content items of the recommendation are ranked based on a relevance score indicating a relevance of each of the recommended digital content items to the context of the environment and/or each of the identified digital content identified in the environment. In some implementations, the digital content items of the recommendation are ranked based on their impact scores.

The display module 370 is configured to display the recommendation to the user. The digital content items of the recommendation may be displayed in a selectable manner. The digital content items in the recommendation may be displayed in an order based on the ranking and/or impact score. In some examples, the display module 370 is configured to display the thumbnails corresponding to the digital content of the recommendation. Examples may be further configured to receive a selection for an aspect of the recommendation including, but not limited to, a selection of one or more recommended digital content items, a thumbnail, a content library, etc. In some implementations, only highest ranked digital content items are displayed to the user (e.g., top five content items).

Embodiments and examples described above may be particularly beneficial to users that may not be aware of an exact theme, contact, or direction of the environment being created. For example, a user may set out to build a game without having a theme or a good idea of what the game mechanics will be. The user begins by gray boxing a level and adding tools from an asset library. According to examples, the system 300 may prompt the user with a recommendation for an "FPS Starter Pack." Based on the recommendation, the user interacts with the prompt to add the recommended starter pack to their project folder (i.e., a work folder or the like) revealing a set of one or more premade guns. The user may then select premade guns and add them to the scene. The environment may be continuously analyzed for assets being selected to provide further contextually relevant recommendations, for example, if the user selects guns that look futuristic. This information may be input to the recommendation ML model which then generates a recommendation for game related and SCI-FI-themed assets. The display module 370 may be further configured to display a prompt (e.g., "We have new recommendations for your game") and/or a thumbnail showing SCI-FI-themed assets. The user may interact with the prompt, to open the asset library including a recommendation page showing several categories of assets that are SCI-FI themed. In this manner, even without the user knowing they wanted a SCI-FI themed character, the recommendations are aligned with the theme based on the development of the environment.

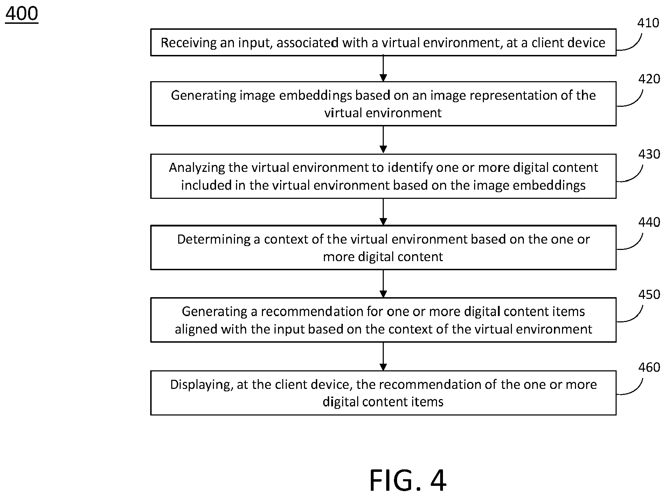

FIG. 4 illustrates a flowchart of a method 400 for providing contextually relevant recommendations. The techniques described herein may be implemented as method(s) that are performed by physical computing device(s); as one or more non-transitory computer-readable storage media storing instructions which, when executed by computing device(s), cause performance of the method(s); or as physical computing device(s) that are specially configured with a combination of hardware and software that causes performance of the method(s).

In some implementations, one or more operation blocks of FIG. 4 may be performed by a processor circuit executing instructions stored in a memory circuit, in a client device, a remote server or a database, communicatively coupled through a network (e.g., processors 212, memories 220, client device 110, server 130, and network 150). In some implementations, one or more of the operations in method 400 may be performed by one or more of the modules 310, 320, 330, 340, 350, 360, and 370. In some examples, methods consistent with the present disclosure may include at least one or more operations as in method 400 performed in a different order, simultaneously, quasi-simultaneously or overlapping in time.

In operation 410, the method 400 includes receiving an input, associated with a virtual environment, at a client device. The input may be a prompt or query made through a platform or application on the client device. In some implementations, the input is a text prompt describing a desired digital content item to be added to the virtual environment.

In operation 420, the method 400 includes generating image embeddings based on an image representation of the virtual environment.

In operation 430, the method 400 includes analyzing the virtual environment to identify one or more digital content included in the virtual environment based on the image embeddings. The method 400 may further include captioning each of the identified one or more digital content based on the analysis.

In operation 440, the method 400 includes determining a context of the virtual environment based on the one or more digital content. The method 400 may further include identifying contextual information of the one or more digital content included in the virtual environment and determining the context of the virtual environment based on the contextual information. The method 400 may further include determining the context of the virtual environment based on the captions.

The method 400 may further include individually evaluating each of the one or more digital content in the virtual environment for context. Further, contextual information of the virtual environment may be collectively evaluated based on the individual evaluations of the one or more digital content to infer the context of the virtual environment.

In operation 450, the method 400 includes generating a recommendation for one or more digital content items aligned with the input based on the context of the virtual environment.

The method 400 may further include retrieving thumbnails and descriptions for a set of relevant content from existing catalogs/libraries. The relevant content indicating digital content items which match the input based on, for example, the input meeting a matching degree threshold to the description. The recommended digital content items may be selected from the set of relevant content based on the context of the virtual environment.

In operation 460, the method 400 includes displaying, at the client device, the recommendation of the one or more digital content items.

The method 400 may further include retrieving thumbnails corresponding to the one or more digital content items and displaying the thumbnails as part of the recommendation.

The recommendation may be for one or more content libraries. The digital content items from the recommendation may be displayed in a selectable manner. The display may include functionalities for applying a selected digital content item. For example, a user may select a content item and, in response to the selection, the selected content item is added to the virtual environment.

The method 400 may further include ranking the one or more digital content items based on a relevance score associated with the context of the virtual environment and displaying (e.g., in a selectable format) the recommendation of the one or more digital content items in an order based on the ranking.

Although FIG. 4 shows example blocks of the method 400, in some implementations, the method 400 may include additional blocks, fewer blocks, different blocks, or differently arranged blocks than those depicted in FIG. 4. Additionally, or alternatively, two or more of the blocks of the method may be performed in parallel.

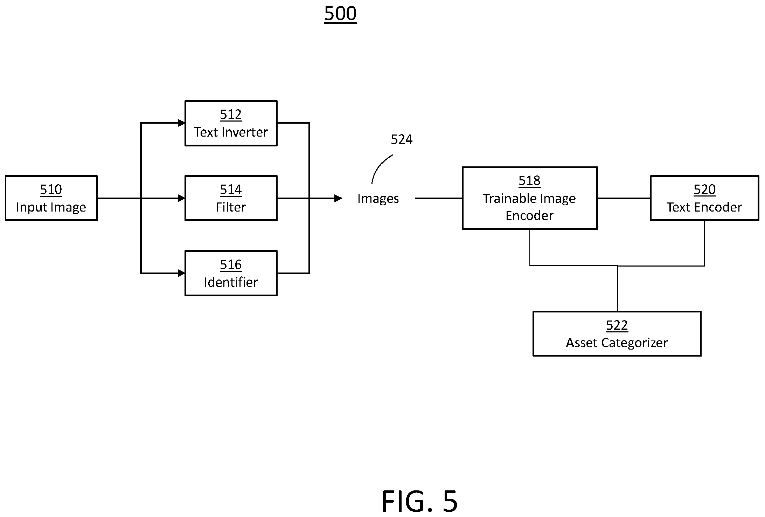

FIG. 5 is a block diagram of an image classification (NN-based) model framework 500 fine-tuned according to one or more examples. The image classification model may utilize a pre-trained text-image model (e.g., CLIP). An input image 510 of an environment, scene, asset, or the like, may be input to the image classification model. In some implementations, the image is segmented based on, but not limited to, for example, color, regions, and/or object concentration. In this instance, each segment may be input to the model individually.

Text inverter 512 may be configured to perform text inversion and find pseudo-words in an embedding space of the pre-trained text-to-image models that can capture both high-level semantics and fine visual details based on the input image 510 and generate asset-images based therefrom (i.e., in-domain generated asset-images). Filter 514 may filter for real-world asset-images from the pre-trained text-to-image models dataset based on input image 510 (i.e., out-of-domain real-world asset-images). Identifier 516 may be configured to identify assets/digital content in the input image 510 and retrieve asset images from existing libraries/catalogs (i.e., in-domain original asset-images). The generated asset-images, real-world asset-images, and the retrieved original asset-images will be collectively referred to, hereinafter, as images 524.

Trainable image encoder 518 is configured to generate image embeddings based on the images 524. The trainable image encoder 518 may be further configured to generate text embeddings (e.g., world-text embeddings corresponding to the real-world asset-images and asset-text embeddings corresponding to the generated/retrieved asset-images). The text embeddings may be generated based on the image embeddings. According to examples, the trainable image encoder 518 may be further configured to identify image classes based on the images 524. Asset categories may be generated based on the image classes using, for example, a multi-class classification model.

Frozen text encoder 520 is configured to generate a description for the input image 510 based on the text embeddings. The description may include a world description based on the world-text embeddings and an asset description based on the asset-text embeddings.

Asset categorizer 522 is configured to implement asset categorization with text-matching based on the generated description and asset categories. The generated description may be modified (or revised) based on the asset categorization.

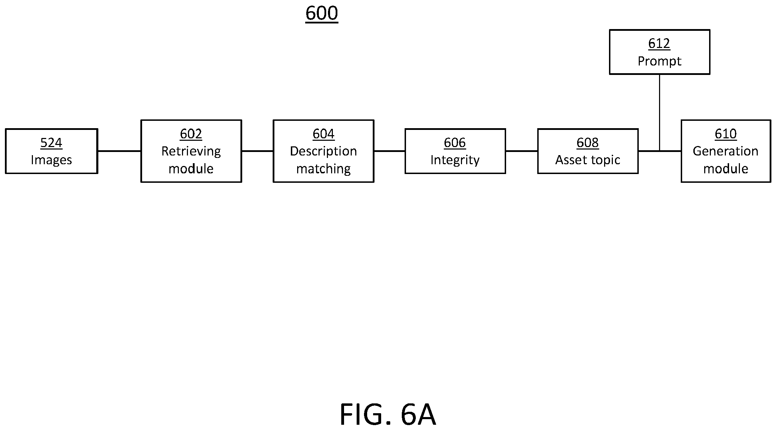

FIGS. 6A-6B are block diagrams of a pretrained image captioning model 600 framework fine-tuned according to one or more examples. FIG. 6A is an illustration of the pretrained image captioning model 600 based on the images 524 (i.e., the images 524 used as input to the pretrained image captioning model 600). Retrieving module 602 may be configured to get asset descriptions associated with the images 524. The asset descriptions may be those generated according to image classification model framework 500. Description matching 604 may be configured to determine a description match based on a matching between the world description and the asset description. Integrity 606 may be configured to determine an integrity of the description and generate a world maturity prediction of the images. The world maturity prediction may indicate a predicted user retention based on similar content as shown in input images. Asset topic 608 may be configured to generate topic or class predictions for the images (i.e., relevant topics for which the images may fall under). In some implementations, subtopics or sub-class predictions may also be generated. The generation module 610 may then generate one or more captions based on the description matching, world maturity prediction, topic predictions, and prompt 612 (e.g., a user input such as a text prompt, query, or the like).

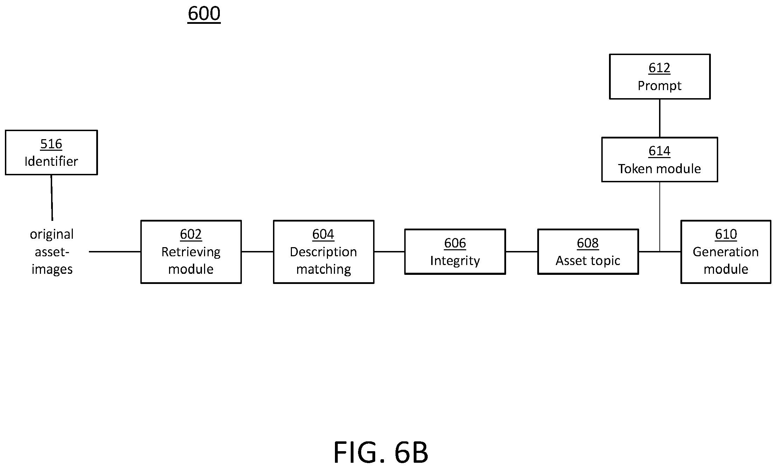

FIG. 6B is an illustration of the pretrained image captioning model 600 based on asset images (i.e., in domain original asset-images). One or more blocks and modules described in FIG. 6A are the same or similarly illustrated in FIG. 6B, and thus descriptions are not reproduced in the descriptions of FIG. 6B. As described with reference to FIG. 5, the identifier 516 identifies asset images from existing libraries/catalogs (i.e., in-domain original asset-images) based on assets/digital content identified in an input (original) image. Examples may include a token module 614 configured to add a special token to the prompt. The special token may indicate an application or platform from which the prompt, metadata, identifying information, or the like, is received. The generation module 610 may generate the one or more captions based on the modified prompt (i.e., with the special token added to the prompt). In some examples, the generation module 610 is configured to perform textual inversions. By non-limiting example, textual inversions may include finetuning for OFA. In some examples, the generation module 610 is configured to learn embeddings of the special token based on an AI model, while keeping the other input data (i.e., the description matching, world maturity prediction, topic predictions, and prompt) frozen.

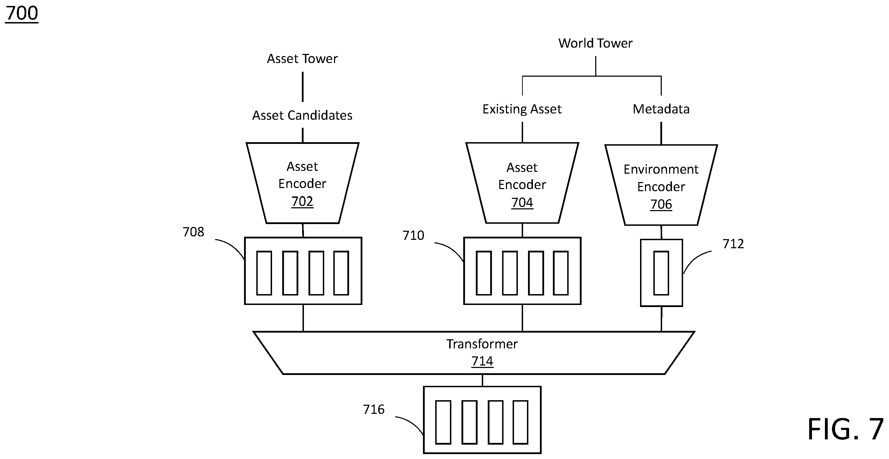

FIG. 7 illustrates a block diagram of a ranking (or reranking) workflow 700 in accordance with the recommendation ML model at inference. The recommendation ML model may include two stages: a candidate retrieval layer that detects relevant asset candidates from a pool of assets (e.g., asset tower and world tower indicating pools of assets), and a reranking layer which reranks the relevant asset candidates. In some implementations, the candidate retrieval layer generates the asset candidates based on an initial clustering/categorization of assets and heuristics (such as, e.g., most popular assets across worlds (all time, last week, last month, etc.), co-occurrence for asset categories, collaborative-filtering approach, and item by item content similarity.

Candidate assets are selected based on an initial pre-screening from the asset libraries/catalogs. The candidate assets may include images and their corresponding descriptions. The candidate assets are input to the asset encoder 702. The asset encoder 702 generates candidate asset embeddings 708. The environment (or virtual environment) may be analyzed to identify existing assets (e.g., as described with reference to identifying module 320). The existing asset images and descriptions are input to an asset encoder 704. The asset encoder 704 generates existing asset embeddings 710 based on the existing asset images and their corresponding descriptions. The environment may also be analyzed to identify metadata associated with the environment. By non-limiting example, the metadata may indicate context, descriptions, tags, captions, scenes, or the like, associated with the environment. The metadata is input to an environment encoder 706. The environment encoder 706 generates a world representation 712 based on the information identified in the environment.

The candidate asset embeddings 708, existing asset embeddings 710, and world representation 712 are input to a transformer 714. The transformer 714 may be an end-to-end (E2E) transformer for candidate reranking. The transformer 714 generates candidate asset probabilities 716 based on the candidate asset embeddings 708, existing asset embeddings 710, and world representation 712. The probabilities are then used to generate the ranking for which a recommendation is provided.

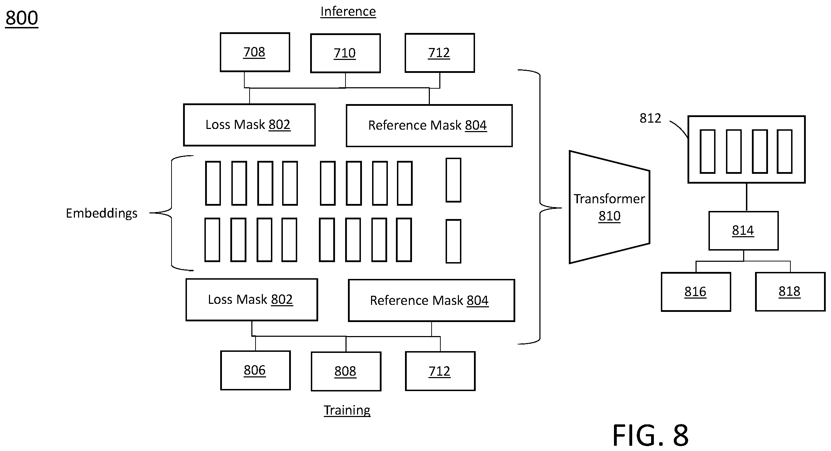

FIG. 8 illustrates a workflow 800 of a process for training a transformer for candidate reranking.

At an inference stage, candidate asset embeddings (708), existing asset embeddings (710), and a world representation (712) are generated. A loss mask 802 is applied to the embeddings. During training, negative candidates from a set of selected candidate assets are sampled and a sequence of existing assets are randomly masked. Embeddings of the negative candidate samples 806, randomly masked sequence of existing assets 808, and the world representation 712 are masked based on the loss mask 802 and a reference mask 804. Transformer 810 generates asset probabilities 812 based on the masked embeddings. Masked binary cross entropy 814 may be used to determine loss. The binary cross entropy loss function may be based on the loss masks 816 and asset labels 818.

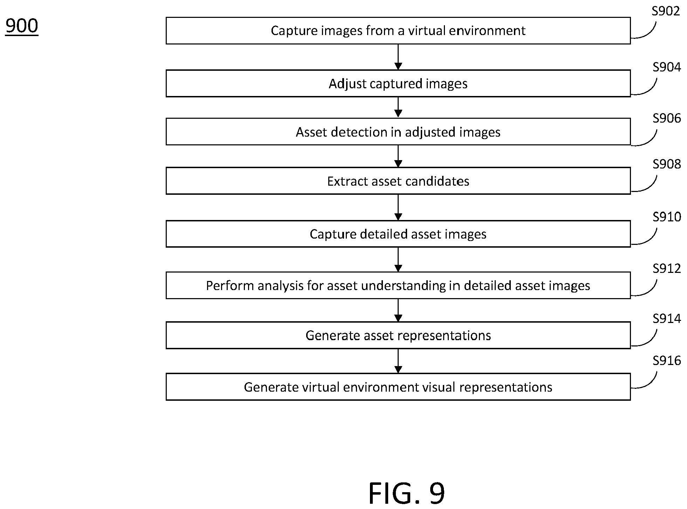

FIG. 9 illustrates a block diagram of a process 900 applied to the recommendation ML model to fine-tune the ML model and improve the image dataset.

To improve the virtual environment, it is fundamental to first understand contents inside the virtual environment. Examples provide improvements to content understanding beyond asset detection via, for example, caption generation for scenes (which is useful for understanding context of a virtual environment) as well as leveraging image datasets based on existing assets in the virtual environment and real-world images in large-scale datasets. These image datasets provide for better asset detection (e.g., identifying assets using the identifying module 320 and determining context using the context determination module 340), thus improving content recommendations.

As shown in FIG. 9, images are captured from the virtual environment (S902) using a first image capturing model. At S904, the captured images are adjusted by, for example, zooming out. At S906, asset detection is performed on the adjusted images. At S908, asset candidates are extracted based on the asset detection. Metadata associated with the asset candidates may also be retrieved (e.g., asset title, coordinates in the virtual environment, etc.). The process may also include generating potential asset titles for the asset candidates. At S910, detailed asset images are captured from, for example, real-world images using a second image capturing model. At S912, the assets in the detailed asset images are analyzed to better understand the assets and their context. At S914, asset representations are generated based on the asset understanding. At S916, the asset representations are used to generate virtual environment visual representations using a fusion model or the like.

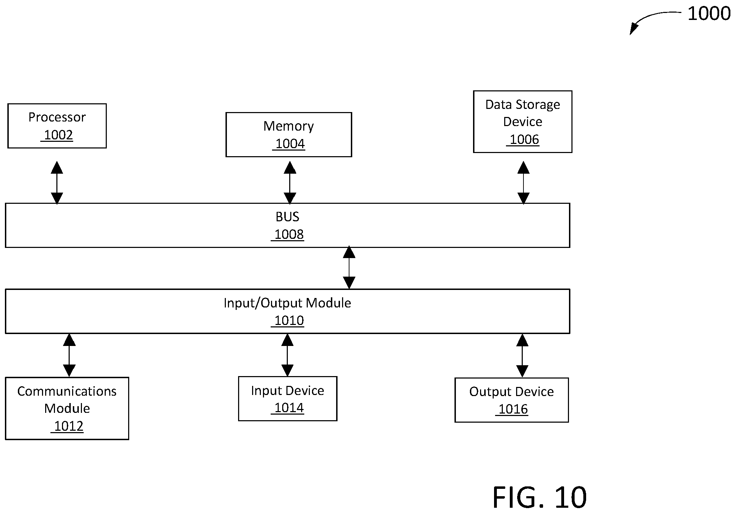

FIG. 10 is a block diagram illustrating an exemplary computer system 1000 with which the client and server of FIGS. 1 and 2, and method(s) described herein can be implemented. In certain aspects, the computer system 1000 may be implemented using hardware or a combination of software and hardware, either in a dedicated server, or integrated into another entity, or distributed across multiple entities. Computer system 1000 may include a desktop computer, a laptop computer, a tablet, a phablet, a smartphone, a feature phone, a server computer, or otherwise. A server computer may be located remotely in a data center or be stored locally.

Computer system 1000 (e.g., client 110 and server 130) includes a bus 1008 or other communication mechanism for communicating information, and a processor 1002 (e.g., processors 212) coupled with bus 1008 for processing information. By way of example, the computer system 1000 may be implemented with one or more processors 1002. Processor 1002 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 1000 can include, in addition to hardware, code that creates an execution environment for the computer program in question, e.g., code that constitutes processor firmware, a protocol stack, a database management system, an operating system, or a combination of one or more of them stored in an included memory 1004 (e.g., memories 220), such as a Random Access Memory (RAM), a Flash Memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled to bus 1008 for storing information and instructions to be executed by processor 1002. The processor 1002 and the memory 1004 can be supplemented by, or incorporated in, special purpose logic circuitry.

The instructions may be stored in the memory 1004 and implemented in one or more computer program products, e.g., one or more modules of computer program instructions encoded on a computer-readable medium for execution by, or to control the operation of, the computer system 1000, and according to any method well-known to those of skill in the art, including, but not limited to, computer languages such as data-oriented languages (e.g., SQL, dBase), system languages (e.g., C, Objective-C, C++, Assembly), architectural languages (e.g., Java, .NET), and application languages (e.g., PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, wirth languages, and xml-based languages. Memory 1004 may also be used for storing temporary variable or other intermediate information during execution of instructions to be executed by processor 1002.

A computer program as discussed herein does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 1000 further includes a data storage device 1006 such as a magnetic disk or optical disk, coupled to bus 1008 for storing information and instructions. Computer system 1000 may be coupled via input/output module 1010 to various devices. Input/output module 1010 can be any input/output module. Exemplary input/output modules 1010 include data ports such as USB ports. The input/output module 1010 is configured to connect to a communications module 1012. Exemplary communications modules 1012 (e.g., communications modules 118) include networking interface cards, such as Ethernet cards and modems. In certain aspects, input/output module 1010 is configured to connect to a plurality of devices, such as an input device 1014 (e.g., input device 214) and/or an output device 1016 (e.g., output device 216). Exemplary input devices 1014 include a keyboard and a pointing device, e.g., a mouse or a trackball, by which a user can provide input to the computer system 1000. Other kinds of input devices 1014 can be used to provide for interaction with a user as well, such as a tactile input device, visual input device, audio input device, or brain-computer interface device. For example, feedback provided to the user can be any form of sensory feedback, e.g., visual feedback, auditory feedback, or tactile feedback; and input from the user can be received in any form, including acoustic, speech, tactile, or brain wave input. Exemplary output devices 1016 include display devices, such as an LCD (liquid crystal display) monitor, for displaying information to the user.

According to one aspect of the present disclosure, the client device 110 and server 130 can be implemented using a computer system 1000 in response to processor 1002 executing one or more sequences of one or more instructions contained in memory 1004. Such instructions may be read into memory 1004 from another machine-readable medium, such as data storage device 1006. Execution of the sequences of instructions contained in main memory 1004 causes processor 1002 to perform the process steps described herein. One or more processors in a multiprocessing arrangement may also be employed to execute the sequences of instructions contained in memory 1004. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back-end component, e.g., a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. The communication network (e.g., network 150) can include, for example, any one or more of a LAN, a WAN, the Internet, and the like. Further, the communication network can include, but is not limited to, for example, any one or more of the following tool topologies, including a bus network, a star network, a ring network, a mesh network, a star-bus network, tree or hierarchical network, or the like. The communications modules can be, for example, modems or Ethernet cards.

Computer system 1000 can include clients and servers. A client and server are generally remote from each other and typically interact through a communication network. The relationship of client and server arises by virtue of computer programs running on the respective computers and having a client-server relationship to each other. Computer system 1000 can be, for example, and without limitation, a desktop computer, laptop computer, or tablet computer. Computer system 1000 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 1002 for execution. Such a medium may take many forms, including, but not limited to, non-volatile media, volatile media, and transmission media. Non-volatile media include, for example, optical or magnetic disks, such as data storage device 1006. Volatile media include dynamic memory, such as memory 1004. Transmission media include coaxial cables, copper wire, and fiber optics, including the wires forming bus 1008. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

To illustrate the interchangeability of hardware and software, items such as the various illustrative blocks, modules, components, methods, operations, instructions, and algorithms have been described generally in terms of their functionality. Whether such functionality is implemented as hardware, software, or a combination of hardware and software depends upon the particular application and design constraints imposed on the overall system. Skilled artisans may implement the described functionality in varying ways for each particular application.

As used herein, the phrase "at least one of" preceding a series of items, with the terms "and" or "or" to separate any of the items, modifies the list as a whole, rather than each member of the list (i.e., each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

To the extent that the term "include," "have," or the like is used in the description or the claims, such term is intended to be inclusive in a manner similar to the term "comprise" as "comprise" is interpreted when employed as a transitional word in a claim. The word "exemplary" is used herein to mean "serving as an example, instance, or illustration." Any embodiment described herein as "exemplary" is not necessarily to be construed as preferred or advantageous over other embodiments.

A reference to an element in the singular is not intended to mean "one and only one" unless specifically stated, but rather "one or more." All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public regardless of whether such disclosure is explicitly recited in the above description. No clause element is to be construed under the provisions of 35 U.S.C. §112, sixth paragraph, unless the element is expressly recited using the phrase "means for" or, in the case of a method clause, the element is recited using the phrase "step for."

While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed, to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products. Other variations are within the scope of the following claims.

## Claims

1. A computer-implemented method, performed by at least one processor, the method comprising:
receiving an input, associated with a virtual environment, at a client device;
generating image embeddings based on an image representation of the virtual environment;
analyzing the virtual environment to identify one or more digital content included in the virtual environment based on the image embeddings;
determining a context of the virtual environment based on the one or more digital content;
generating a recommendation for one or more digital content items aligned with the input based on the context of the virtual environment; and
displaying, at the client device, the recommendation of the one or more digital content items.

2. The computer-implemented method of claim 1, wherein the input is a text query describing a desired digital content item to be added to the virtual environment.

3. The computer-implemented method of claim 1 or 2, further comprising:
captioning each of the one or more digital content based on the analyzing; and
determining a context of the virtual environment based on the one or more digital content.

4. The computer-implemented method of any preceding claim, further comprising identifying contextual information of the one or more digital content included in the virtual environment, wherein the context of the virtual environment is determined based on the contextual information.

5. The computer-implemented method of any preceding claim, wherein determining a context of the virtual environment includes:
individually evaluating each of the one or more digital content in the virtual environment for context; and
collectively evaluating contextual information of the virtual environment based on individual evaluations of the one or more digital content to infer the context of the virtual environment.

6. The computer-implemented method of any preceding claim, further comprising categorizing each of the one or more digital content based on predefined image classes, descriptions, and text-image pairings.

7. The computer-implemented method of any preceding claim, wherein the recommendation includes a content library recommendation.

8. The computer-implemented method of any preceding claim, further comprising:
retrieving thumbnails corresponding to the one or more digital content items; and
displaying, in a selectable format, the thumbnails as the recommendation.

9. The computer-implemented method of any preceding claim, further comprising:
ranking the one or more digital content items based on a relevance score associated with the context of the virtual environment; and
displaying, in a selectable format, the recommendation of the one or more digital content items in an order based on the ranking.

10. The computer-implemented method of any preceding claim, further comprising:
generating captions associated with the one or more digital content included in the virtual environment;
wherein determining a context of the virtual environment is based on the one or more digital content and the captions.

11. A system comprising:
one or more processors; and
a memory storing instructions which, when executed by the one or more processors, cause the system to carry out the method of any preceding claim.

12. A computer-readable storage medium having instructions embodied thereon, the instructions being executable by one or more processors to cause the one or more processors to carry out the method of any of claims 1 to 10.

13. A computer program product comprising instructions which, when the computer program is executed by a computer, cause the computer to carry out the method of any of claims 1 to 10.
